Europäisches Patentamt

European Patent Office

Office européen des brevets

(19)

(11) Veröffentlichungsnummer: **0 274 653 B1**

# (12) EUROPÄISCHE PATENTSCHRIFT

(45) Veröffentlichungstag der Patentschrift: 07.08.91

(51) Int. Cl.⁵: **H04M 3/24**, H04Q 11/04

(21) Anmeldenummer: 87117979.2

(22) Anmeldetag: 04.12.87

(54) **Verfahren zur Diagnose und Prüfung eines Schnittstellenbausteins.**

(30) Priorität: 17.12.86 DE 3643099

(43) Veröffentlichungstag der Anmeldung:
20.07.88 Patentblatt 88/29

(45) Bekanntmachung des Hinweises auf die
Patenterteilung:
07.08.91 Patentblatt 91/32

(84) Benannte Vertragsstaaten:
AT BE CH DE FR GB IT LI NL SE

(56) Entgegenhaltungen:

TELCOM REPORT, Band 8, Nr. 5,
September/Oktober 1985, Seiten 321-326,
Berlin, DE; F. HLAWA: "Wartung von PCM-
Anschlüssen im System EWSD"

NACHRICHTEN TELEFONBAU UND NORMAL-
ZEIT, Nr. 86, 1984, Seiten 46-54, Dreieich, DE;
G. ZAPEL et al.: "EWSD-Projektierung am
Beispiel einer Test-Vermittlungsstelle"

(73) Patentinhaber: **Siemens Aktiengesellschaft**
**Wittelsbacherplatz 2**
**W-8000 München 2(DE)**

(72) Erfinder: **Steis, Bruno, Dipl.-Ing.**
**Grosshadernerstrasse 25**
**W-8000 München 70(DE)**
Erfinder: **Jugel, Alfred**
**Priessnitzweg 13**
**W-8192 Geretsried(DE)**
Erfinder: **Martin, Horst, Dipl.-Phys.**
**Simmerlein-Platz 11**
**W-8000 München 50(DE)**

EP 0 274 653 B1

## Beschreibung

Die Erfindung betrifft ein Verfahren zur Diagnose und Prüfung eines Schnittstellenbausteins zur Verbindung einer PCM-Übertragungsstreoke eines digitalen Zeitmultiplex-Fernmeldesystems mit einer Vermittlungsstelle dieses Fernmeldesystems, der neben anderen Bestandteilen einen Sprachspeicher zur zeitlichen Anpassung des auf der Übertragungsstrecke gebildeten Pulsrahmens an den dem Betrieb der Vermittlungsstelle zugrundeliegenden Pulsrahmen aufweist, ferner seinerseits mit einer Reihe von unterschiedliche Kriterien der Informationsübertragung auf der PCM-Strecke bewertenden Überwaohungsschaltungen ausgestattet ist, denen zumindest zum Teil Fehlerzähler zugeordnet sind, und der über eine Rechnerschnittstelle mit einer eigenen Steuerung in Verbindung steht.

Ein solcher Schnittstellenbaustein ist in der Praxis als hochintegrierter Baustein ausgebildet, und so konzipiert, daß er für einen universellen Einsatz geeignet ist. Er erfüllt dabei relativ komplexe Funktionen. Hierzu gehören neben der erwähnten Anpassung des Streckentaktes an den Vermittlungstakt und der Anpassung des Streckenpulsrahmens an den Pulsrahmen der Vermittlungsstelle u.a. in bezug auf empfangene Digitalsignale die Funktionen der Entzerrung, der Pegelanpassung, der Streckentaktgewinnung, der Dekodierung des HDB3-Codes, des Ausblendens des Pulsrahmen-Meldewortes und bezogen auf abgehende Digitalsignale, beispielsweise das Einfügen des Pulsrahmen-Kennungswortes und des Pulsrahmen-Meldewortes, der HDB3-Kodierung sowie des Sendens des abgehenden Digitalsignals.

Die Aufgabe der Erfindung besteht nun darin, ein Diagnose und Prüfkonzept für einen solchen Schnittstellenbaustein anzugeben, das sowohl Routineprüfungen zur möglichst lückenlosen Überwachung der Funktion des Bausteins gestattet, die den Normalbetrieb nicht beeinflussen, als auch zur Fehlerlokalisierung und für das Stadium der Inbetriebnahme verschieden weitreichende außerhalb des normalen Betriebs durchzuführende Prüfungen zuläßt.

Zur Lösung dieser Aufgabe ist ein Verfahren der eingangs genannten Art erfindungsgemäß dadurch gekennzeichnet, daß die Prüfschaltungen samt nachgeordneten Fehlerzählern, der Sprachspeicher und die Rechnerschnittstelle während des unverändert fortdauernden bestimmungsgemäßen Betriebs des Schnittstellenbausteins Routineprüfungen unterzogen werden, wozu veranlaßt durch die Steuerung die Prüfschaltungen außer mit den von ihnen zu überwachenden Kriterien mit einem Fehler entsprechenden Simulationsgrößen beaufschlagt werden, wobei jeweils im Falle eines Ansprechens der Prüfschaltungen wie bei Vorliegen eines tatsächlichen Fehlers der zu überwachenden Funktion eine Fehleranzeige in einem Zustandsregister bzw. ein Weiterzählen des Fehlerzählers erfolgt, jedoch keine der für den Fall des Vorliegens eines tatsächlichen Fehlers vorgesehenen Maßnahmen ergriffen wird, wozu ferner beim Sprachspeicher entweder jeweils bezogen auf eine einzelne kanalindividuelle Speicherzelle die einzuschreibende Information mit einem Paritätsbit versehen und nach einem Auslesen einer Paritätsprüfung unterworfen wird, oder, gesteuert von einer übergeordneten Steuerung der Vermittlungsstelle nach vermittlungstechnischer Sperrung des betreffenden Kanals ein normalerweise als Freikanal-Codewort gesendetes Bitmuster an die betreffende Sprachspeicherzelle vermittelt und wieder an die Vermittlungsstelle zurückgesendet wird, um dort einen Vergleich mit einem richtigen Freikanal-Codewort unterzogen zu werden, und wozu der Inhalt von durch die Steuerung des Schnittstellenbausteins beschriebenen Steuerregistern zerstörungsfrei ausgelesen und jeweils mit einer Sollinformation verglichen wird, und daß zum Zwecke der Fehlerlokalisierung und zur Prüfung vor einer Inbetriebnahme bei unterbrochenen bestimmungsgemäßen Betrieb des Schnittstellenbausteins, veranlaßt durch die übergeordnete Steuerung der Vermittlungsstelle wahlweise unterschiedliche Bestand teile des Schnittstellenbausteins umfassende Prüfschleifen gebildet werden, wobei im Falle der der Prüfung des Sprachspeichers dienenden Prüfschleife eine den Inhalt zweier Pulsrahmen erfassende Paritätsprüfung vorgenommen wird.

Nachstehend wird die Erfindung anhand eines Ausführungsbeispiels unter Bezugnahme auf eine Zeichnung näher erläutert. In der Zeichnung zeigen:

Fig 1    Schnittstellenbausteine derjenigen Art, auf die sich das erfindungsgemäße Verfahren bezieht, in ihrer Einordnung in ein digitales Zeitmultiplex-Fernmeldesystem,

Fig 2    ein mehr ins Einzelne gehendes Blockschaltbild eines solchen Schnittstellenbausteins.

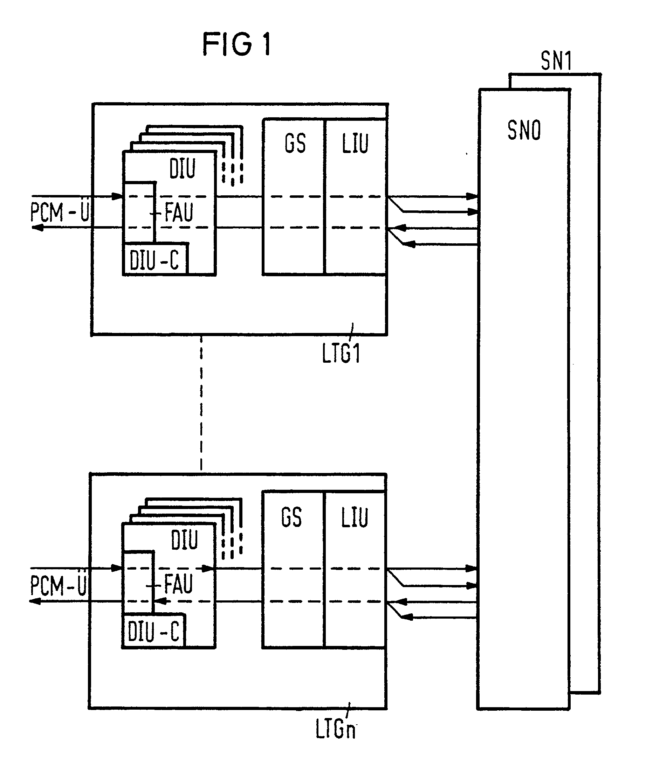

In der Figur 1 sind Teile einer Vermittlungsstelle eines digitalen Zeitmultiplex-Fernmeldenetzes dargestellt. Es sind dies ein gedoppeltes Koppelnetz SN sowie Anschlußgruppen LTG1 bis LTGn für den Anschluß von PCM-Übertragungsstrecken PCM-Ü, die Verbindungen zu weiteren solcher Vermittlungsstellen herstellen.

Die Anschlußgruppen LTG1 bis LTGn bestehen ihrerseits jeweils aus einer Schnittstelleneinheit LIU, über die eine Verbindung zum Koppelnetz SN hergestellt wird, ferner aus einem Gruppenkoppler GS sowie aus Schnittstelleneinheiten DIU für digitale Übertragungssysteme, deren eigentlicher Schnittstellenteil der Schnittstellenbaustein FAU ist, auf den sich das erfindungsgemäße Verfahren bezieht und der eine Verbindung zu einer der schon erwähnten PCM-Übertragungsstrecken PCM-Ü herstellt, eine Anschlußgruppe LTG kann bis zu vier Schnittstelleneinheiten DIU umfassen.

Der Schnittstellenbaustein FAU steht unter dem Steuereinfluß einer Steuerung DIU-C.

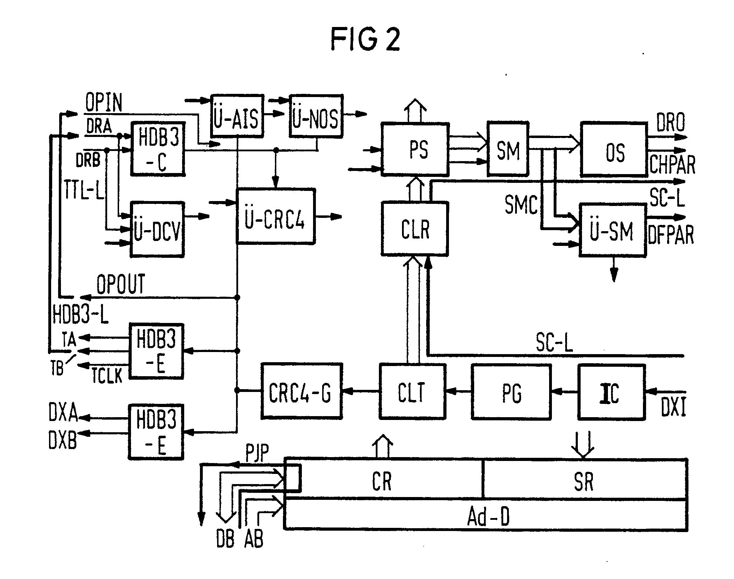

Das detaillierte Blockschaltbild der Schnittstelleneinheit FAU gem. Fig. 2 zeigt im Sendezweig, über den vom Koppelnetz SN empfangene Informationen an den abgehenden Zweig einer PCM-Übertragungsstrecke PCM-Ü weitergegeben werden, eine Kanalauswahlschaltung IC, eine Schaltung PG, die den Sendepulsrahmen erzeugt, in dem sie ein Rahmenkennungswort und ein Meldewort zeitgerecht zur Verfügung stellt, eine Sendeschaltung CLT, eine Schaltung CRC4-G, durch die zum Zwecke der Synchronisierung bestimmte Bits in den Informationsstrom eingefügt werden, sowie Einrichtungen HDB3-E, durch die das Sendesignal für die Übertragung im sogenannten HDB3-Code kodiert wird.

Im Empfangszweig des Schnittstellenbausteins gem. Fig. 2 liegt auf der Seite des Anschlusses der PCM-Strecke ein Dekoder HDB3-D, durch den das im genannten HDB3-Code kodierte Leitungssignal dekodiert wird, eine Einrichtung PS, die in erster Linie für die Pulsrahmensynchronisierung zuständig ist, ein Sprachspeicher SM, der als Pufferspeicher Phasenunterschiede zwischen dem ankommenden Bitstrom und den Zeitverhältnissen, die den Betrieb der Vermittlungsstelle zugrunde liegen, herstellt, sowie eine Einrichtung OS, die entsprechend der Einrichtung IC im Empfangszweig der Zeitkanalauswahl dient.

Der Schnittstellenbaustein gem. Fig. 2 umfaßt ferner eine Reihe von Überwachungsschaltungen, nämlich die Schaltung Ü-DCV, die den ankommenden Bitstrom daraufhin überwacht, ob die Gesetzmäßigkeit des HDB3-Codes wiederholt verletzt worden ist, eine Überwachungsschaltung Ü-AIS, die anspricht, wenn im ankommenden Bitstrom über längere Zeitspannen hinweg dauernd Bits des Binärwerts 1 auftreten, eine Überwachungsschaltung Ü-NOS, die dann ein Alarmsignal liefert, wenn auf der Übertragungsstrecke überhaupt kein PCM-Signal auftritt, eine Überwachungsschaltung Ü-CRC4, die den ankommenden Bitstrom auf das zeitgerechte Auftreten eines einen Überrahmen definierenden Codewortes überwacht. Die vorerwähnte Synchronisierschaltung enthält ebenfalls eine hier nicht gesondert dargestellte Überwachungsschaltung, die auf das ordnungsgemäße Auftreten von Rahmenkennungsworten aufprüfen. Schließlich ist noch einbe Überwachungsschaltung Ü-SM vorhanden, die der Überprüfung des Sprachspeichers SM dient.

Der Schnittstellenbaustein FAU wird, wie dargelegt, von einer Steuerung DIU-C gesteuert, die jedoch in Fig. 2 nicht dargestellt ist. Der Informationsaustausch zwischen dieser Steuerung und einem Befehlsregister CR erfolgt über einen Datenbus DB. Daneben ist ein Adreßbus AB vorhanden, auf dem die Steuerung Ansteueradressen an einen Adreßdekoder Ad-D liefert.

Die Fig. 2 zeigt ferner ein Statusregister SR, in dem Angaben über bestehende Alarmmeldungen gespeichert sind.

Einzelnen der Überwachungsschaltungen sind Fehlerzähler zugeordnet.

Nachstehend wird unter Bezugnahme auf die Fig. 2 näher auf das erfindungsgemäße Verfahren eingegangen.

Dieses Verfahren gliedert sich in sogenannte ONLINE-Prüfungen, bei deren Durchführung der bestimmungsgemäße Betrieb des Schnittstellenbausteins nicht unterbrochen wird und bei denen es sich um Routineprüfungen handelt, und in OFFLINE-Prüfungen, bei denen der bestimmungsgemäße Betrieb des Schnittstellenbausteines unterbrochen ist und die der Fehlerlokalisierung und der Überprüfung des Schnittstellenbausteins FAU bzw. der gesamten Schnittstellenbaueinheit DIU im Einschaltzustand dienen. Zu den ONLINE-Prüfungen gehört die Überprüfung der Überwachungsschaltungen selbst. Diese wird in der Form vorgenommen, daß den einzelnen Überwachungsschaltungen zusätzlich zu den von ihnen zu überwachenden Kriterien Simulationsgrößen zugeführt werden, die einem Fehlerfall entsprechen. (In Fig. 2 angedeutet durch Signaleingänge (2) der Überwachungsschaltungen). Daraufhin angegebene Fehlersignale werden ggf. im zugeordneten Fehlerzähler gezählt bzw. führen zu einem Setzen des entsprechenden Bits im Statusregister SR. Sofern die von einzelnen Überwachungsschaltungen überwachten Kriterien als zu derselben Kategorie gehörig betrachtet werden können und dementsprechende Fehler dieselben Reaktionen erfordern, sind die von diesen Überwachungsschaltungen abgegebenen Alarmsignale zu einem Summensignal verknüpft.

Bei der Prüfschaltung PS werden durch Simulation Schlupfbedingungen erzeugt, die zu einer Abgabe eines Signals führen, das im Normalbetrieb einen Schlupfausgleich durch einen Kanalzählersprung bewirkt, hier im Prüfungsbetrieb jedoch ohne Konsequenzen bleibt.

Maßnahmen, die im Normalfall bei Ansprechen der Überwachungsschaltungen ggf. ergriffen werden, unterbleiben während dieser Überprüfung der Überwachungsschaltungen.

Im Anschluß an diese Prüfphase werden das Statusregister und die Fehlerzähler durch die Steuerung DIU-C abgefragt und ausgewertet. Die Überwachungsschaltungen stehen während dieser Prüfphase für ihre eigentlichen Überwachungsaufgaben nicht zur Verfügung, andererseits bleibt der im Zusammenhang mit der Informationsübertragung bestehende Betrieb der Schnittstellenschaltung unverändert aufrechterhalten.

Beim Sprachspeicher SM kann gemäß dem Verfahren der Erfindung eine ONLINE-Prüfung in zwei Varianten durchgeführt werden.

Bei der ersten Variante werden bezogen auf eine einzelne jeweils einem Zeitkanal zugeordnete Speicherzelle die einzuschreibenden Informationen mit einem Paritätsbit versehen und nach einem Auslesen durch die Überwachungsschaltung Ü-SM einer Paritätsprüfung unterworfen. (In Fig. 2 angedeutet durch Prüfweg SMC). Hierbei spielt es keine Rolle, in welchem Zustand sich der betreffende Zeitkanal befindet, ob also der Kanal frei oder belegt ist.

Eine zweite Prüfungsvariante wird im Gegensatz zu erstgenannten, für deren Ablauf die Steuerung DIU-C verantwortlich ist, durch eine übergeordnete Steuerung veranlaßt, die für sämtliche der Anschlußgruppen LTG1 bis LTGn gem. Fig. 1 zuständig ist. Es wird im Zuge dieser Prüfung jeweils ein bestimmter Zeitkanal vermittlungstechnisch gesperrt und ein Codewort, mit der Bitkombination eines normalerweise als Freikanal-Code gesendeten Codeworts an die betreffende Sprachspeicherzelle des Sprachspeichers SM vermittelt und von dort wieder an die Vermittlungsstelle zurückgesendet, wo es von der genannten übergeordneten Steuerung mit dem Sollwert eines Freikanal-Codewortes verglichen wird. (In Fig. 2 angedeutet durch Prüfweg SC-L). Die übrigen Zeitkanäle bleiben von dieser Prozedur unbeeinflußt, so daß auch hier von einer ONLINE-Prüfung gesprochen werden kann.

Schließlich wird auch die Schnittstelle zur Steuerung DIU-C des Schnittstellenbausteins FAU im ONLINE-Betrieb geprüft, indem von dieser Steuerung aus in das Steuerregister CR eingeschriebene Steuerinformationen unter ihrer jeweiligen Adresse zerstörungsfrei ausgelesen und an die Steuerung zurückgesendet werden, wo ein Vergleich mit einer betreffenden Soll-Information stattfindet. (In Fig. 2 angedeutet durch Prüfweg PJP).

Neben diesen ONLINE-Prüfungen sind erfindungsgemäß auch OFFLINE-Prüfungen des Schnittstellenbausteins FAU vorgesehen, die zum einen dazu dienen, eine Fehlerlokalisierung in Fällen vorzunehmen, in denen das Ergebnis der ONLINE-Prüfung eine eindeutige Bestimmung des Fehlerortes nicht zuläßt, und dazu, den Schnittstellenbaustein FAU im Einschaltbetrieb zu überprüfen.

Diese Prüfungen werden ebenfalls durch die genannte übergeordnete Steuerung veranlaßt. Sie werden in einem Betriebszustand, in dem kein vermittlungstechnischer Betrieb stattfindet, durch Bildung von Prüfschleifen durchgeführt, die wahlweise unterschiedliche Bestandteile des Schnittstellenbausteins und darüber hinaus der Baugruppe DIU, deren Bestandteil der Schnittstellenbaustein ist, durchgeführt. Im Falle einer Prüfung, die den Sprachspeicher erfaßt, wird ein Prüfmuster an den Empfangseingang DXI des Bausteins IC im Empfangszweig des Schnittstellenbausteins in sämtlichen Kanälen eingespeist, wobei der Inhalt jeweils zweier aufeinanderfolgender Pulsrahmen mit einem Paritybit versehen ist, so daß dem rahmenweisen Wechsel von Synchronwort und Meldewort am Pulsrahmenanfang Rechnung getragen ist und auf dem Wege über die Baueinheit IC, PG, CLT, CLR und PS in den Sprachspeicher eingeschrieben. Beim Wiederauslesen wird mit Hilfe der Überwachungsschaltung Ü-SM eine Parityprüfung vorgenommen. Es sind durch diese Prüfschleife also nicht nur der Sprach speicher selbst sondern auch Teile des Sende- und Empfangszweigs der Baugruppe DIU erfaßt.

Bei der Bildung einer anderen Prüfschleife wird von gesonderten Ausgängen TA und TB des HDB3-Kodierers HDB3-E aus das kodierte Signal an Stelle auf die PCM-Strecke PCM-Ü an die Eingänge DRA und DRB des HDB3-Dekodierers HDB3-D zurückgeschleift. (Prüfweg HDB3-L) Durch diese Schleifenprüfung sind auch die Einheiten HDB3-E und HDB3-D, die Überwachungsschaltungen Ü-AIS, Ü-NOS, Ü-CRC4 und die Pulsrahmenüberwachung in der Baueinheit PS bezüglich der Abgabe eines "Gut"-Signals überwacht, da ein solcher rückgeschleifter Bitstrom die von diesen Überwachungsschaltungen zu überwachenden Kriterien in jedem Fall erfüllt. Über den schon erwähnten zweiten HDB3-Codierer HDB3-E wird gleichzeitig ein Anzeigesignal an die PCM-Übertragungsstrecke geliefert, das der über dieser Strecke erreichbaren Vermittlung der Gegenseite eine Anzeige darüber liefert, daß derzeit ein außergewöhnlicher Betrieb, hier nämlich ein Diagnosebetrieb, vorliegt.

Alternativ zu der erläuterten Prüfschleife kann auch unter Umgehung der Kodierer bzw. Dekodierer HDB3-E bzw. HDB3-D eine Schleifenprüfung vorgenommen werden, indem das Binärsignal am Ausgang OPOUT auf den Eingang OPIN zurückgeschleift wird. (Prüfweg TTL-L in Fig. 2).

## Patentansprüche

1. Verfahren zur Diagnose und Prüfung eines Schnittstellenbausteins zur Verbindung einer PCM-Übertragungsstrecke eines digitalen Zeitmultiplex-Fernmeldesystems mit einer Vermittlungsstelle eines Fernmeldesystems, der neben anderen Bestandteilen einen Sprachspeicher zur zeitlichen Anpassung des auf der Übertragungsstrecke gebildeten Pulsrahmens, an den dem Betrieb der Vermittlungsstelle zugrunde liegenden Pulsrahmen aufweist, ferner seinerseits mit einer Reihe von unterschiedlichen Kriterien der Informationsübertragung auf der PCM-Strecke bewerteten Überwachungsschaltungen ausgestattet ist, denen zumindest zum Teil Fehlerzähler zugeordnet sind, und der über eine Rechnerschnittstelle mit einer eigenen Steuerung in Verbindung steht, **dadurch gekennzeichnet,** daß die Prüfschaltungen (Ü-AIS, Ü-NOS, Ü-DCV, Ü-CRC4, Ü-SM) samt nachgeordneten Fehlerzählern, der Sprachspeicher (SM) und die Rechnerschnittstelle (DB/CR) während des unverändert fortdauernden bestimmungsgemäßen Betriebs des Schnittstellenbausteins (FAU) Routineprüfungen unterzogen werden, wozu veranlaßt durch die Steuerung die Prüfschaltungen außer mit den von ihnen zu überwachenden Kriterien mit einem Fehler entsprechenden Simulationsgrößen beaufschlagt werden, wobei jeweils im Falle eines Ansprechens der Prüfschaltungen wie bei Vorliegen eines tatsächlichen Fehlers der zu überwachenden Funktion eine Fehleranzeige in einem Zustandsregister (SR) bzw. ein Weiterzählen des Fehlerzählers erfolgt, jedoch keine der für den Fall eines Vorliegens eines tatsächlichen Fehlers vorgesehenen Maßnahmen ergriffen wird, wozu ferner beim Sprachspeicher (SM) entweder jeweils bezogen auf eine kanalindividuelle Speicherzelle die einzuschreibende Information mit einem Paritätsbitfeld versehen und nach einem Auslesen einer Paritätsprüfung (Ü-SM) unterworfen wird, oder, gesteuert von einer übergeordneten Steuerung der Vermittlungsstelle nach vermittlungstechnischer Sperrung des betreffenden Kanals ein normalerweise als Freikanal-Codewort von der Vermittlungsstelle her gesendetes Bitmuster an die betreffende Sprachspeicherzelle vermittelt und wieder an die Vermittlungsstelle zurückgesendet wird, um dort einem Vergleich mit einem richtigen Freikanal-Codewort unterzogen zu werden, und wozu der Inhalt des durch die Steuerung des Schnittstellenbausteins beschriebenen Steuerregisters (CR) zerstörungsfrei ausgelesen und jeweils mit einer Soll-Information verglichen wird, und daß zum Zwecke der Fehlerlokalisierung und zur Prüfung des Schnittstellenbausteins vor einer Inbetriebnahme bei unterbrochenem, bzw. noch nicht aufgenommenen bestimmungsgemäßen Betrieb des Schnittstellenbausteins, veranlaßt durch die übergeordnete Steuerung wahlweise unterschiedliche Bestandteile des Schnittstellenbausteins umfassende Prüfschleifen gebildet werden, wobei im Falle der der Prüfung des Sprachspeichers dienenden Prüfschleife eine den Inhalt zweier Pulsrahmen erfassende Parity-Prüfung vorgenommen wird.

## Claims

1. Method for diagnosing and testing an interface unit for connecting a PCM transmission link of a digital time-division multiplex telecommunication system to an exchange in a telecommunication system, which, in addition to other components, exhibits a speech memory for adapting the timing of the pulse frame formed on the transmission link to the pulse frame on which the operation of the exchange is based, which itself is furthermore equipped with a number of monitoring circuits evaluating different criteria of the information transmission on the PCM link, which are at least partially associated with error counters, and which is connected to a separate control system via a computer interface, characterised in that the test circuits (Ü-AIS, Ü-NOS, Ü-DCV, Ü-CRC4, Ü-SM) and subsequent error counters, the speech memory (SM) and the computer interface (DB/CR) are subjected to routine tests during the proper operation of the interface unit (FAU) which continues unchanged, for which purpose, apart from the criteria to be monitored by them, simulation quantities corresponding to an error are applied to the test circuits under control by the control system, in which connection in each case when the test circuits are operated as in the case of the presence of an actual error of the function to be monitored, a fault indication occurs in a state register (SR) or an incrementing of the error counter occurs, but none of the measures provided for the case of the presence of an actual error is taken, for which purpose, furthermore, in the speech memory (SM), the information to be entered is provided with a parity bit field related either in each case to a channel-individual memory cell and after a reading-out is subjected to a parity check (Ü-SM), or, under control by a higher-priority control system of the exchange, after a switching-related blocking of the relevant channel, a bit pattern normally sent from the exchange as idle-channel code word is switched to the relevant speech memory cell and is sent back to the exchange in order to be subjected there to a comparison with a correct idle-channel code word, and for which purpose the content of the control register (CR) loaded by the control system of the interface unit is nondestructively read out and is in each case compared with a nominal information, and in that, for the purpose of error locating and for checking the interface unit, optional test loops comprising different components of the interface unit are formed under initiation by the higher-priority control system before operation is started in the case of proper operation of the interface unit which was interrupted or had not yet been started, a parity check covering the content of two pulse frames being performed in the case of the test loop used for checking the speech memory.

## Revendications

1. Procédé pour effectuer le diagnostic et le contrôle d'un module d'interface servant à raccorder une section de transmission MIC d'un système de télécommunications numériques à multiplexage temporel à un central d'un système de télécommunications, qui comporte, en plus d'autres composants, une mémoire de paroles pour l'adaptation temporelle de la trame d'impulsions formée dans la section de transmission, à la trame d'impulsions sur laquelle est basé le fonctionnement du central, et qui est en outre équipée, pour sa part, de circuits de contrôle qui évaluent des critères différents de la transmission d'informations dans la section MIC et auxquels sont associés au moins en partie des compteurs d'erreurs, et qui est raccordé par l'intermédiaire d'une interface de raccordement à un calculateur, à une unité de commande particulière, caractérisé par le fait que les circuits de contrôle (Ü-AIS, Ü-NOS, Ü-DCV, Ü-CRC4, Ü-SM) y compris des compteurs d'erreurs branchés en aval, la mémoire de paroles (SM) et l'interface (DB/CR) de raccordement à un calculateur, sont soumis à des contrôle de routine pendant le fonctionnement, qui se poursuit d'une manière inchangée et conforme aux spécifications, du module d'interface (FAU) et que pour ces contrôles, les circuits de contrôle sont chargés, d'une manière déchenchée par l'unité de commande, non seulement par les critères qu'ils doivent contrôler, mais également avec des grandeurs de simulation correspondant à une erreur, auquel cas lors d'une réponse des circuits de contrôle comme dans le cas de la présence d'une erreur effective de la fonction à contrôler, il se produit un affichage d'erreurs dans un registre d'état (SR) ou une avance du compteur d'erreurs, tandis qu'aucune des dispositions prévues pour le cas de la présence d'une erreur effective n'est prise, et pour lesquelles en outre, dans la mémoire de paroles (SM), l'information devant être enregistrée est affectée d'une zone de bits de parité, d'une manière rapportée respectivement à une cellule de mémoire prévue pour chaque canal, et est soumise, après une lecture, à un contrôle de parité (Ü-SM), ou bien, d'une manière commandée par l'unité de commande de rang supérieur du central, après le blocage du canal considéré, du point de vue de la technique de commutation, un profil binaire émis normalement en tant que mot de code de canal libre à partir du central est envoyé à la cellule considérée de la mémoire de paroles et est à nouveau renvoyé au central pour y être comparé à un mot de code correct du canal libre, et pour lesquels le contenu du registre de commande (CR) enregistré par l'unité de commande du module d'interface est lu d'une manière non destructive et est comparé respectivement à une information de consigne, et que pour la localisation d'erreurs et pour le contrôle du module d'interface avant une mise en service, alors que le fonctionnement, conforme aux spécifications, du module d'interface est interrompu ou n'est pas encore déclenché, les boucles de contrôle comprenant différents composants du module d'interface sont formées au choix, d'une manière déclenchée par l'unité de commande de rang supérieur, auquel cas, pour la boucle de contrôle utilisée pour le contrôle de la mémoire de paroles, un contrôle de parité portant sur le contenu de deux trames d'impulsions est exécuté.

# FIG 1

# FIG 2